# FASCICULE DE BREVET EUROPEEN

(11) **EP 0 635 406 B1**
(45) Date de publication et mention de la délivrance du brevet: **17.12.1997**
(21) Numéro de dépôt: 94401562.7
(22) Date de dépôt: 07.07.1994
(51) Int. Cl.: B60R 22/22

(54) **Dispositif d'ancrage pour ceintures de sécurité**
Verankerungsvorrichtung für Sicherheitsgurte
Seat belt anchoring device

(30) Priorité: 21.07.1993 FR 9308943
(43) Date de publication de la demande: 25.01.1995
(73) Titulaire: Société Anonyme dite: REGIE NATIONALE DES USINES RENAULT, 92109 Boulogne Billancourt (FR)
(72) Inventeur: Llorente, Louis, F-78200 Mantes la Ville (FR); Charollois, Patrick, F-93100 Montreuil (FR); Guimard, Jacques, F-91400 Saclay (FR)
(74) Mandataire: Ernst-Schonberg, Michel

(56) Documents cités:
- WO-A-88/06543
- AU-D- 3 532 668
- DE-U- 8 812 886

## Description

L'invention concerne un dispositif d'ancrage pour ceintures de sécurité de véhicules automobiles qui porte deux boîtiers de verrouillage conforme au préambule de la revendication principale.

L'invention concerne plus précisément un tel dispositif d'ancrage dont les boîtiers de verrouillage sont solidaires du plancher d'un véhicule automobile au voisinage du plan longitudinal médian dudit véhicule.

La publication US-A-4201418 décrit un ancrage de ceinture de sécurité relié à une structure du véhicule par l'intermédiaire d'un élément élastique précontraint qui exerce dans une position bloquée une tension permanente sur la ceinture et qui peut être débloqué par une force générée au cours d'un accident dont le seuil est supérieur à la précontrainte initiale.

La publication WO-A-88/06543 décrit un dispositif d'ancrage de boîtiers de verrouillage montés à articulation sur une lame inextensible dont l'autre extrémité est fixée à une contre-lame d' immobilisation et d'ajustement des languettes de retenue des boucles de maintien des boitiers de verrouillage correspondants.

L'invention a pour objet un ancrage du type prédéfini qui porte deux boîtiers de verrouillage montés directement à articulation sur une lame rigidement reliée à un élément résistant du plancher par l'intermédiaire d'un organe de fixation qui ne nécessite aucun réglage ou ajustement préalable.

Un tel ancrage est agencé conformément aux caractéristiques de la revendication principale.

L'ancrage ainsi réalisé possède une certaine élasticité lorsque les boîtiers de verrouillage sont soumis à un effort de traction.

L'ancrage conforme à l'invention permet également
- l'orientation transversale des boîtiers de verrouillage lors de l'utilisation des ceintures de sécurité,
- l'articulation des boîtiers de verrouillage lors des manoeuvres du siège nécessaires à la transformation de la surface de chargement du véhicule.

D'autres caractéristiques et avantages de l'invention apparaîtront à la lecture de la description d'un exemple de réalisation du dispositif d'ancrage en référence au dessin annexé dans lequel :
- la figure 1 est une vue latérale d'un siège transformable de véhicule automobile en position normale d'utilisation,
- la figure 2 est une vue latérale d'un siège représenté à la figure 1 en position de rangement,
- la figure 3 est une vue latérale à une plus grande échelle du dispositif d'ancrage conforme à l'invention,
- la figure 4 est une vue en coupe frontale du dispositif d'ancrage représenté à la figure 3,
- la figure 5 est une vue en plan de la lame de support des boîtiers de verrouillage du dispositif d'ancrage.

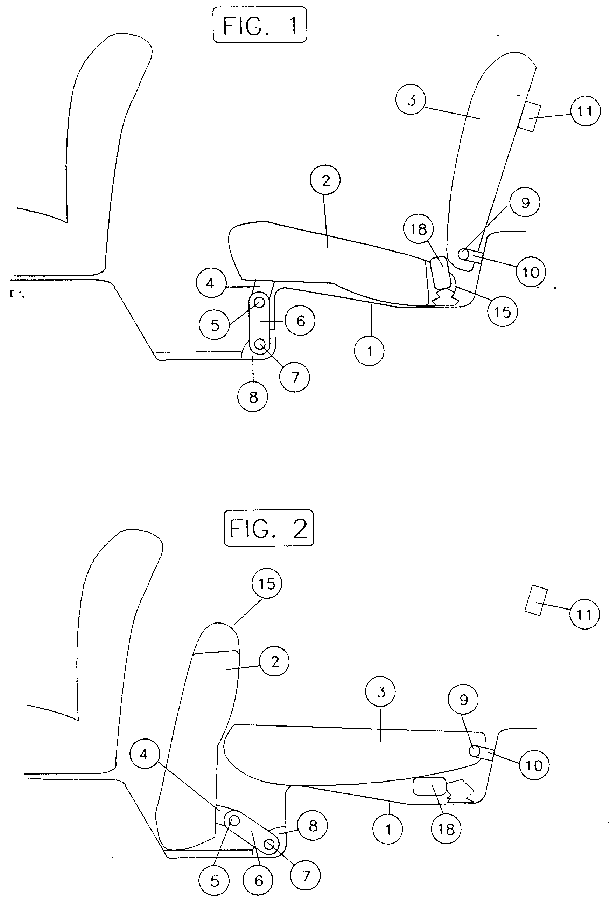

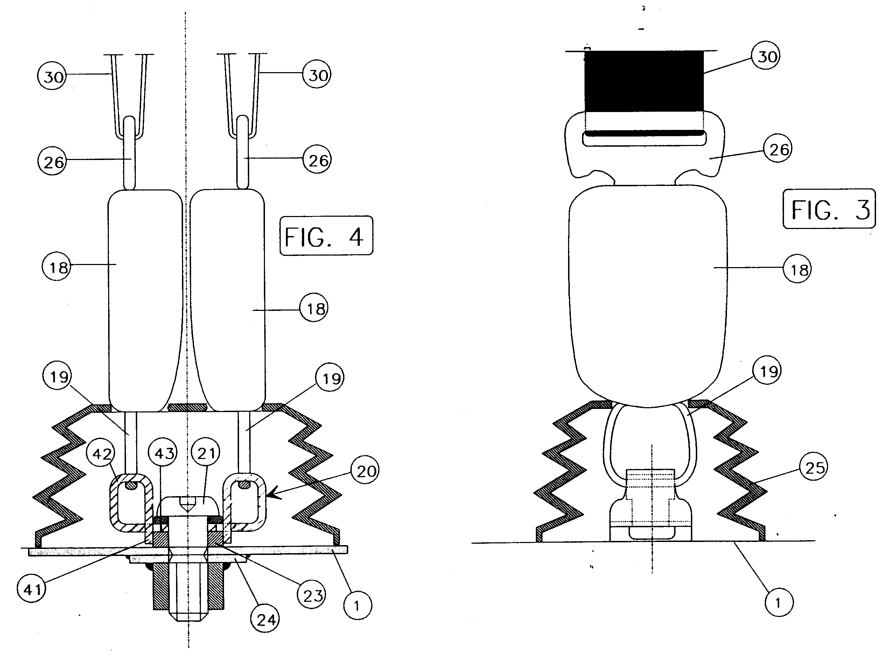

On a représenté sur les figures 1 et 2 un plancher 1 de véhicule automobile supportant un siège arrière constitué, principalement, par une assise 2 et un dossier 3.

L'assise 2 repose, vers sa partie arrière, sur le plancher 1. Elle porte, sous sa partie avant, au moins un bec 4 articulé sur un axe transversal 5 porté par une extrémité d'une biellette 6 articulée sur un axe transversal 7 porté par une chape 8 solidaire du plancher 1. Lorsque le siège occupe sa position normale d'utilisation, comme représenté à la figure 1, la biellette 6 a une orientation sensiblement verticale. On peut prévoir une ou deux biellettes disposées au voisinage de la partie médiane de l'assise, ou bien deux biellettes placées chacune à une extrémité de cette assise.

Le dossier 3 est articulé, à sa base, autour d'un axe transversal 9 porté par une chape 10 solidaire du plancher 1. En position normale d'utilisation, ce dossier s'appuie, à sa partie supérieure, sur des butées 11 solidaires de la carrosserie, tout moyen connu approprié pouvant être utilisé pour verrouiller le dossier dans cette position.

La base du dossier 3 recouvre sur une longueur suffisante l'arrière de l'assise 2 de manière à améliorer l'aspect d'ensemble du siège en supprimant tout intervalle entre la base du dossier et l'assise.

Une encoche 15 est ménagée sur le bord arrière de l'assise 2 pour permettre le passage de boîtiers de verrouillage 18 montés à articulation sur une lame rigidement reliée à un élément résistant du plancher 1.

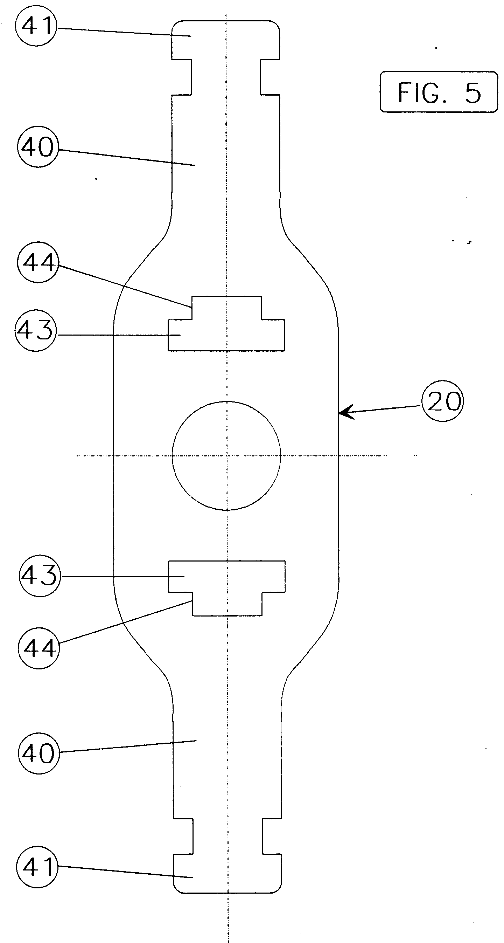

Ainsi que cela est représenté aux figures 3 et 4, deux boîtiers de verrouillage 18 sont montés à articulation sur la lame 20 reliée au plancher 1 à l'aide d'une vis de fixation 21. La lame 20 repose sur une cale d'espacement 23 dont la fonction sera décrite ci-après.

La face inférieure du plancher 1 porte un renfort soudé 24 destiné à augmenter localement la résistance du plancher 1 sous l'action d'un effort de traction exercé sur le boîtier 18. Au renfort 24 est soudé un écrou de retenue de la vis 21 ainsi que cela est bien connu.

Un soufflet de protection 25 monté en appui sur les boîtiers 18 et sur le plancher 1 autorise les déplacements du boîtier 18 sous l'action des efforts de tension communiqués par un moyen connecteur 26 coulissant qui forme la transition entre une sangle thoracique et une sangle de bassin d'une ceinture de sécurité 30.

Comme montré à la figure 5, la lame 20 réalisée en une tôle découpée s'étend symétriquement par deux ailes 40, à partir de sa zone médiane de fixation traversée par la vis 21.

L'extrémité de chaque aile 40 porte une languette 41 de retenue repliée en direction de la zone médiane de fixation. La zone repliée constitue de la sorte une boucle de retenue 42 sur laquelle est enfilée la queue 19 du boîtier de verrouillage 18. La languette 41 est engagée dans une boutonnière 43 limitée par un bord d'appui 44 et s'étend au travers de ladite boutonnière.

La languette 41 possède un col aminci engagé dans la boutonnière correspondante 43 et est repoussée au contact du bord d'appui 44 qui s'oppose de la sorte à l'extraction accidentelle de la languette sous l'effet d'une force de traction exercée sur le boîtier de verrouillage 18.

Selon une autre caractéristique de l'ancrage, la cale d'espacement 23 assure l'espacement longitudinal des languettes 41 et leur blocage au contact des bords d'appui 44 respectifs des boutonnières et favorise l'empilage mécanique des éléments du dispositif entre le plancher 1 et la partie médiane de la lame 20.

## Revendications

1. Dispositif d'ancrage pour ceintures de sécurité qui porte deux boîtiers de verrouillage (18) montés à articulation sur une lame (20) rigidement reliée à un élément résistant, du plancher (1) du véhicule par l'intermédiaire d'un organe de fixation (21), la dite lame (20) s'étendant symétriquement par deux ailes (40) à partir d'une zone médiane de fixation dont les extrémités portent respectivement une languette (41) de retenue, caractérisé par le fait que chaque languette (41) de retenue est repliée en direction de ladite zone médiane et engagée dans une boutonnière (43) réalisée dans ladite lame et limitée par un bord d'appui (44) qui s'oppose à l'extraction de ladite languette (41) sous l'effet d'une force de traction exercée sur le boîtier de verrouillage (18).

2. Dispositif d'ancrage selon la revendication 1, caractérisé par le fait que les languettes de retenue (41) de la lame (20) s'étendent au travers des boutonnières (43) et sont en butée sur une cale d'espacement (23) dans le but de bloquer lesdites languettes au contact des bords d'appui (44) respectifs desdites boutonnières.

## Claims

1. An anchorage arrangement for safety belts which carries two locking casings (18) mounted pivotably on a plate (20) rigidly connected to a strong element of the floor (1) of the vehicle by way of a fixing member (21), said plate (20) extending symmetrically by way of two limbs (40) from a central fixing zone, the ends of which respectively bear a retaining tongue portion (41), characterised in that each retaining tongue portion (41) is bent in the direction of said central zone and engaged in a slot (43) provided in said plate and delimited by a support edge (44) which resists extraction of said tongue portion (41) under the effect of a pulling force applied to the locking casing (18).

2. An anchorage arrangement according to claim 1 characterised in that the retaining tongue portions (41) of the plate (20) extend through the slots (43) and bear against a spacer piece (23) for the purposes of locking said tongue portions in contact with the respective support edges (44) of said slots.

## Patentansprüche

1. Verankerungsvorrichtung für Sicherheitsgurte, mit zwei Einrastgehäusen (18), die mit einem Plättchen (20) gelenkig verbunden sind, das mittels einer Befestigungseinrichtung (21) mit einem widerstandsfähigen Bauteil des Bodens (1) des Kraftfahrzeugs fest verbunden ist, wobei sich das Plättchen (20) von einem mittigen Befestigungsabschnitt aus, dessen Enden jeweils eine Befestigungslasche (41) tragen, symmetrisch über zwei Flügel (40) erstreckt, dadurch gekennzeichnet, dass jede Befestigungslasche (41) in Richtung des mittleren Befestigungsabschnitts umgebogen ist und in eine längliche Aussparung (43) eingreift, die im Plättchen ausgebildet ist und von einem Stützrand (44) begrenzt ist, der dem Herausziehen der Lasche (41) unter der Wirkung einer auf das Einrastgehäuse (18) ausgeübten Zugkraft entgegenwirkt.

2. Verankerungsvorrichtung nach Anspruch 1, dadurch gekennzeichnet, dass die Befestigungslaschen (41) des Plättchens (20) die länglichen Aussparungen (43) durchsetzen und sich an einem Abstandskeil (23) abstützen, um die Laschen in Kontakt mit den jeweiligen Stützrändern (44) der länglichen Aussparungen zu verriegeln.
